# EUROPÄISCHE PATENTSCHRIFT

(11) **EP 0 466 739 B1**
(45) Veröffentlichungstag und Bekanntmachung des Hinweises auf die Patenterteilung: **15.09.1993**
(21) Anmeldenummer: 90905433.0
(22) Anmeldetag: 06.04.1990
(51) Int. Cl.: G08B 13/04, G08B 13/16

(54) **ÜBERWACHUNGSSYSTEM ZUR ÜBERWACHUNG DER SCHEIBEN EINES RAUMES, Z.B. KFZ-INNENRAUMES**
MONITORING SYSTEM FOR MONITORING THE PANES OF GLASS OF A SPACE, FOR EXAMPLE A MOTOR VEHICLE INTERIOR
SYSTEME DE CONTROLE POUR CONTROLER LES VITRES D'UN ESPACE, PAR EXEMPLE DE L'HABITACLE D'UN VEHICULE A MOTEUR

(30) Priorität: 12.04.1989 DE 3912025; 13.03.1990 DE 9003065 U
(43) Veröffentlichungstag der Anmeldung: 22.01.1992
(73) Patentinhaber: SIEMENS AKTIENGESELLSCHAFT, 80333 München (DE)
(72) Erfinder: EHRINGER, Helmut, D-8411 Deuerling (DE); SCHWEIGER, Jürgen, D-8400 Regensburg (DE); MÜLLER, Norbert, D-8400 Regensburg (DE)
(86) Internationale Anmeldenummer: DE9000274
(87) Internationale Veröffentlichungsnummer: WO9012379

(56) Entgegenhaltungen:
- EP-A- 113 512
- DE-A- 1 929 472
- DE-A- 3 504 552
- US-A- 4 134 109
- US-A- 4 665 379
- US-A- 4 837 558
- US-A- 4 853 677

## Beschreibung

Die Erfindung wurde zwar für die KFZ-Innenraumüberwachung, genauer : für die Überwachung der Scheiben eines KFZ auf Scheibenbruch, entwickelt. Die Erfindung ist nicht nur für die Innenraumüberwachung bei einem KFZ oder bei sonstigen Fahrzeugen durch Überwachung der Scheiben geeignet, sondern auch zur Überwachung der Scheiben von Immobilien, z.B. der Scheiben von Lagerhallen.

Das im Oberbegriff des Patentanspruches 1 definierte Überwachungssystem ist vorbekannt, vgl.
- GB-A-1 402 530, dort besonders die Figur 1 zusammen mit der zugehörenden Beschreibung.

Dort werden die in den überwachten Scheiben auftretenden Körperschallschwingungen oberhalb von 100 kHz bis zu mehreren hundert kHz überwacht, indem auf jeder der zu überwachenden Scheiben je ein entsprechender piezokeramischer Sensor, also pro Innenraum etliche entsprechend geeignete Mikrofonanordnungen befestigt werden, vgl. dort z.B.
- die Seite 2, linke Spalte, letzter Absatz.

In diesem Frequenzbereich breiten sich nämlich Körperschallschwingungen durch die Scheiben sehr gut aus, während sich Schallschwingungen in der Luft in diesem Ultraschallbereich nur mit hoher Dämpfung ausbreiten könnten. Dementsprechend ist dieses bekannte Überwachungssystem recht unempfindlich für Störungen durch Luftschallschwingungen in diesem Frequenzbereich, wenn der Luftschall aus Schallquellen außerhalb des Raumes stammt.

Die Erfindung benutzt zur Innenraumüberwachung zwar auch Schallfrequenzen oberhalb von 100 kHz, wodurch das erfindungsgemäße Überwachungssystem ebenfalls sehr unempfindlich für Luftschall dieses Frequenzbereiches ist, wenn die störende Luftschallquelle außerhalb des überwachten Raumes ist.

Die Erfindung benutzt aber nicht die Messung des sich in den Scheiben ausbreitenden Körperschalles, der bei einem Bruch der Scheiben entsteht. Die Erfindung vermeidet damit auch den bei diesem Stande der Technik vorhandenen Nachteil, daß ein hoher Aufwand, nämlich jeweils ein Sensor pro zu überwachender Scheibe zusammen mit deren Verdrahtungen und der zugehörenden Auswertung nötig ist, und den oft zusätzlichen Nachteil, daß ein relativ kleiner Bruch der Scheibe, der weit abseits jener Stelle ist, an welcher der Sensor die Scheibe berührt, manchmal schwer oder nicht mehr als Scheibenbruch erkannt wird.

Daneben ist durch die
- US-A-4,665,379
   bekannt, die verschiedenen Scheiben eines KFZ-Innenraumes mittels einer einzigen Mikrofonanordnung zu überwachen, wobei diese im KFZ-Innenraum bzw. an dessen Wänden befestigte Mikrofonanordnung die Luftschallschwingungen im Frequenzbereich zwischen 5 kHz bis rund 8 kHz mißt. Die Luftschwingungen breiten sich in diesem Frequenzbereich nahezu ungedämpft in der Innenraumluft aus. Bei diesem Uberwachungssystem ist zwar der Aufwand an Mikrofonen und Verdrahtungen entsprechend klein, aber dafür steigt der Aufwand, um jene Störungen, welche durch außerhalb des KFZ-Innenraumes vorhandene Luftschallquellen erzeugt werden, zu eliminieren.
   Außerdem ist durch
- DE-A1-35 04 552
   bekannt, zur Überwachung eines Innenraumes den Luftschall mittels einer Mikrofonanordnung bei zwei Ultraschallfrequenzen, nämlich bei 40 kHz und bei 50 kHz zu messen, bzw. gemäß der dortigen Figur einerseits mittels eines Bandpasses relativ schmalbandig bei einer dieser beiden Frequenzen zu messen, sowie andererseits mittels eines Tiefpasses im ganzen Frequenzband von NULL bis zur anderen dieser beiden Ultraschallfrequenzen. Bis zu diesen Frequenzen überträgt nämlich die Luft die betreffenden Schwingungen noch recht gut, wobei dann allerdings jene außerhalb des Raumes strahlenden Schallquellen weiterhin erheblich stören können, weil deren Schall nicht vollkommen an der Außenoberfläche des Raumes nach außen reflektiert wird.

Außerdem zeigten Serien von eigenen Versuchen, daß gewiefte Einbrecher die in den Scheiben auftretenden Schallschwingungen vor allem in dem Frequenzbereich bis zu 50 kHz - aber auch noch erheblich darüber - mit Leichtigkeit dämpfen können. Die Erfindung erstebte aber eine Lösung, bei welcher der Einbrecher nicht mehr solche Dämpfungsmaßnahmen erfolgreich einsetzen kann. Bei der Erfindung wollte man sich nicht auf eine solche Messung der Ultraschallschwingungen verlassen.

Dem Fachmann ist wohlbekannt, wie man die Richtcharakteristik einer Mikrofonanordnung - auch für Ultraschall - einem jeweiligen besonderen Bedarf entsprechend formen kann, vgl. z.B.
- US-2 833 9989,
- US-3 833 825,
- US-4 395 652,
- US-4 597 099,
- EP-A1-37 620,
- EP-A1-75 302,
- EP-A2-308 899,
- FR-A-2 293 844, und
- DE-B1-28 55 143.

Die Erfindung betrifft also die Überwachung eines Innenraumes, indem, wie bei der durch die
- GB-A-1 402 530

beschriebenen Überwachungssystem, die durch einen Scheibenbruch ausgelösten Schallschwingungen oberhalb von 100 kHz gemessen werden, wobei sich solche Schallschwingungen zwar sehr gut in vielen Materialien wie in Glas, aber nur schlecht in der Luft ausbreiten.

Die Erfindung löst die Aufgabe,
- mit besonders wenig Aufwand, besonders mit einer einzigen Mikrofonanordnung, im Frequenzbereich oberhalb 100 kHz gleichzeitig etliche Scheiben des Innenraumes auf Scheibenbruch mit angenähert gleich hoher Zuverlässigkeit überwachen zu können, selbst wenn die Anzahl seiner zu überwachenden Scheiben sehr hoch ist und manche der zu überwachenden Scheiben nahe am Sensor und andere sehr weit entfernt von ihm sind,
- durch die Verwendung dieser hohen Frequenzen gleichzeitig Störeinflüsse durch Fremdgeräusche aus der Umgebung weitgehend vermeiden zu können, sowie
- gleichzeitig das fehlerhafte Nichterkennen von Scheibenbrüchen weitgehend zu vermeiden, weil, wie sich bei eigenen Versuchen mit KFZ-Scheiben ergab, bei alleinigem Ausnutzen der Frequenzen unterhalb 100 kHz noch zu häufig ein absichtlich herbeigeführter Scheibenbruch nicht erkannt wird, sobald ein Einbrecher durch irgendwelche Maßnahmen die Schwingfähigkeit der zerbrechenden Scheibe dämpft - ein Aspekt, welcher auch die Messung des sich dann in der Scheibe ausbreitenden Körperschalles verbietet - ,

durch die im Patentanspruch 1 angegebenen Maßnahmen.

Die Erfindung eignet sich darüber hinaus, den Sensor zusätzlich für andere Innenraumüberwachungsmethoden zu verwenden, die vielleicht sogar einen ganz anderen Frequenzbereich der empfangenen Schwingungen ausnutzen : Die Erfindung gestattet nämlich, die Mikrofonanordnung z.B. zusätzlich als Empfangselement eines akustischen Radarsystemes zu benutzen, statt nur als Organ zum Erkennen von Scheibenbruch. Dann gestattet die Erfindung, zusätzlich verdächtige Bewegungen im Raum, u.zw. mittels ebenfalls besonders wenig Aufwand festzustellen - auch mit wenig Aufwand für die Mikrofonanordnung.

Bei der Erfindung ist es vor allem möglich, alle Glasflächen eines KFZ mit der einzigen Mikrofonanordnung abzusichern, wie später noch erläutert wird. Im Vergleich zu den bekannten Überwachungssystemen werden bei der Erfindung also die von der Innenraumluft übertragenen Ultraschallfrequenzen oberhalb von 100 kHz ausgewertet. Dabei kann die Entfernung zwischen der Mikrofonanordnung und den zu überwachenden Glasflächen bei der Erfindung auch mehrere Meter betragen.

Die in den übrigen Patentansprüchen genannten Maßnahmen gestatten, zusätzliche Vorteile zu erreichen. U.a. gestatten nämlich die Maßnahmen gemäß Patentanspruch
- 2,: in einem KFZ eine besonders leicht herstellbare spiegelsymmetrische Richtcharakteristik zu verwenden, also z.B. eine Mikrofonanordnung, deren Richtcharakteristik in besonders leicht herstellbarer Weise zwei sich schwach überlappende Keulen bildet,
- 3,: eine besonders günstige Lösung für ein KFZ zu bieten, wobei Hindernisse, z.B. Nackenstützen, zwischen dem Sensor und den zu überwachenden Scheiben leicht vermeidbar sind; zusätzlich kann ein Einbrecher nur viel schwerer gleichzeitig die Scheibe und den Sensor zerstören als wenn der Sensor am unteren Rand der Scheibe angebracht wäre; überdies kann dann der Sensor sogar im Fuße des Innen-Rückspiegels oder auch in einer dort angebrachten Innenbeleuchtung eingebaut sein und dadurch eine besonders unauffällige, vom Design her besonders ansprechende Lösung ermöglichen,
- 4,: eine weitere günstige Lösung für ein KFZ zu bieten, wobei der Sensor auch dann recht unauffällig in der dortigen Dachverkleidung angebracht werden kann, wobei ebenfalls Hindernisse, z.B. Nackenstützen, zwischen dem Sensor und den zu überwachenden Scheiben leicht vermeidbar sind; zusätzlich kann ein Einbrecher nur viel schwerer gleichzeitig die Scheibe und den Sensor zerstören als wenn der Sensor am unteren Rand der Scheibe angebracht wäre,
- 5 und 6,: die Mikrofonanordnung auch als Empfangsorgan eines akustischen Radars mitausnutzen zu können.

Die Erfindung wird anhand der in den vier FIGUREN gezeigten Beispiele der Erfindung weiter erläutert. Dabei zeigt FIG
- 1: ein Beispiel einer Schaltung, welche die von der Mikrofonanordnung empfangenen Schwingungen auswerten kann,
- 2: ein Beispiel zur Überwachung der verschiedenen Scheiben eines KFZ mit einer einzigen Mikrofonanordnung, also mit besonders wenig Aufwand, sowie
- 3 und 4: Beispiele zur Überwachung der verschiedenen Scheiben eines KFZ ebenfalls mit einer einzigen Mikrofonanordnung, der hier aber eine ausgewählte Richtcharakteristik aufweist.

Die FIG 2 bis 4 zeigen also jeweils ein KFZ mit Front F und Heck H.

Wird in einem überwachten Raum, also z.B. in einem überwachten KFZ, eine Scheibe eingeschlagen, dann entstehen im Raum Schallwellen nicht nur im hörbaren, sondern auch im nicht hörbaren Bereich, nämlich im Ultraschallbereich.

Die Beispiele zeigen jeweils die erfindungsgemäße Anordnung des Sensors S in einem KFZ-Innenraum I, dessen Scheiben, vgl. in den FIG 2 bis 4 die Frontscheibe GF, die Türscheiben GV, GS, die Heckscheiben GH, sowie in FIG 2 die gläserne Dachlucke GD und ferner in FIG 3 und 4 die kleinen hinteren Seitenscheiben GK, zu überwachen sind. Es handelt sich also beim gezeigten KFZ-Beispiel auch um einen Raum I mit einer Mehrzahl von Scheiben, die alle gemeinsam, hier jeweils durch nur eine einzige Mikrofonanordnung S, auf Scheibenbruch zu überwachen sind. In den FIGUREN sind auch die diese Scheiben umgebenden Wände W angedeutet, welche ihrerseits also seitliche und/oder obere und/oder untere Wände W des Kfz-Innenraumes I darstellen. Die Mikrofonanordnung S überwacht also alle Scheiben des KZF gemeinsam auf Bruch, also auf eine Zerstörung z.B. durch einen Einbrecher.

Die Mikrofonanordnung S kann die typischerweise bei einem Scheibenbruch auftretenden Schwingungen, z.B. dafür typische Ultraschallschwingungen, feststellen. Dazu ist die Mikrofonanordnung S - es könnten erfindungsgemäß auch mehrere Mikrofonanordnungen S im gezeigten KFZ angebracht sein - im Innenraum I, und/oder an zumindest einer der Wände W des Raumes I, jeweils ohne mechanische Berührung der zu überwachenden Scheiben GF, GV, GS, GK, GH, GD so befestigt, daß die betreffende Mikrofonanordnung S jeweils im wesentlichen nur die von der Innenraumluft übertragenen Schwingungen empfangen kann. Die Mikrofonanordnung S berührt also nicht die zu überwachenden Scheiben, sondern reagiert vor allem auf den bei Scheibenbruch von den Scheiben ausgehenden, von der Innenraumluft übertragenen Schallwellen.

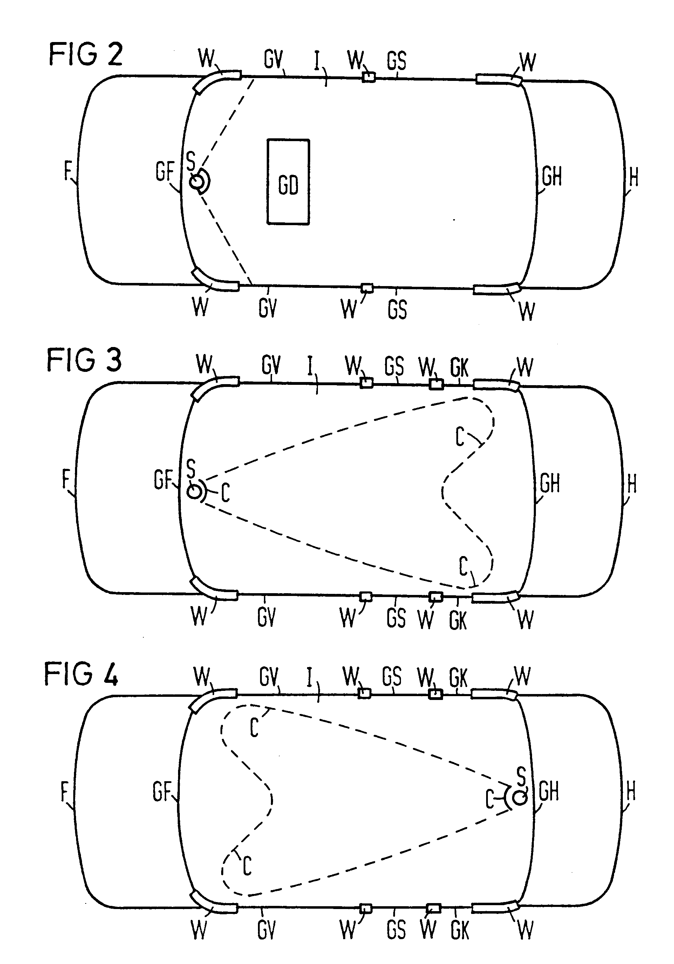

Erfindungsgemäß beträgt die Anzahl dieser Mikrofonanordnungen S, welche typischerweise bei dem Scheibenbruch auftretende, von der Innenraumluft I übertragene akustische Schwingungen feststellen können - in den in den FIG 2 bis 4 gezeigten Beispielen ist es nur ein einziger - kleiner als die Anzahl der auf Scheibenbruch zu überwachenden Scheiben GF, GV, GS, GK, GH, GD des betreffenden Raumes I, also in den gezeigten Beispielen kleiner als die Anzahl der auf Scheibenbruch zu überwachenden Fenster GF, GV, GS, GK, GH, GD. Der Aufwand ist also bei der Erfindung besonders gering.

Die Erfindung vermeidet daher den Nachteil des Standes der Technik, einen hohen Aufwand, nämlich jeweils eine Mikrofonanordnung pro zu überwachender Scheibe zusammen mit deren Verdrahtungen, zu benötigen. Die Erfindung vermeidet überdies den Nachteil, daß beim Stande der Technik häufig - z.B. wegen der unterschiedlichen Übertragungswege auf der Scheibe vom Bruch zur Mikrofonanordnung -ein relativ kleiner Bruch einer Scheibe schwer oder nicht mehr als Scheibenbruch erkannt wird, wenn der Bruch weit abseits jener Stelle ist, an der die Mikrofonanordnung beim Stande der Technik die Scheibe berührt. Vor allem gestattet die Erfindung zu vermeiden, daß der Übertragungsweg des Schalles in der Scheibe vom Bruch zur die Scheibe berührenden Mikrofonanordnung durch einen Einbrecher künstlich gedämpft wird, z.B. indem er die Schallausbreitung dämpfende Klebefolien auf die Scheibe vor deren Zerbrechen legt. Bei der Erfindung wird ja die Schallausbreitung in der Innenraumluft zur Erkennung des Scheibenbruches ausgenutzt, wobei die beim Scheibenbruch typischerweise praktisch immer auftretenden Schallfrequenzen zur Scheibenbrucherkennung ausgenutzt werden.

Außerdem gestattet die Erfindung, sogar mit besonders wenig Aufwand die gewünschte Überwachung zu erreichen, nämlich mit weniger Mikrofonanordnungen, als es zu überwachende Scheiben gibt. Das ermöglicht bei der Erfindung zusätzlich eine erhebliche Einsparung der Verkabelungen der Mikrofonanordnungen.

Um ein Zerbrechen einer Glasscheibe zu erkennen, wird erfindungsgemäß in den gezeigten Beispielen also z.B. eine oder auch mehrere, schmale oder auch breite Bandbreiten der typischerweise bei Scheibenbruch auftretenden Ultraschallfrequenzen durch einen - oder mehrere - Mikrofonanordnungen aufgenommen und in elektrische Signale umgesetzt. Dabei können die Mikrofonanordnung oder die Mikrofonanordnungen im Prinzip sogar an beliebigen Orten im Fahrzeuginnenraum befestigt sein. - Besonders günstig ist dabei oft eine solche Befestigung, bei der der Schall von den brechenden Scheiben direkt statt um Hindernisse herum zur Mikrofonanordnung gelangen kann. Eine Anordnung der Mikrofonanordnungen nahe an den Glasscheiben ist aber nicht zwingend nötig, eben weil als Übertragungsmedium für die (Ultra-)Schallwellen die Luft verwendet wird.

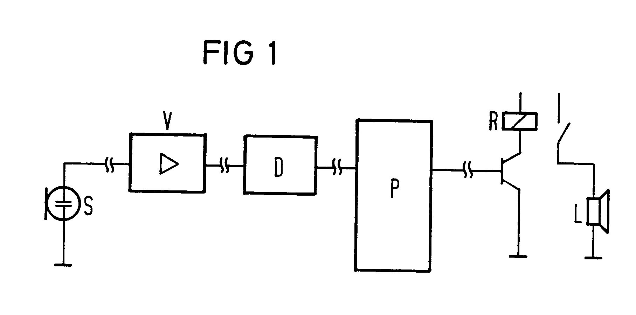

Der (Ultraschall-)Mikrofonanordnung S, vgl. FIG 1, kann z.B. ein ausreichend verstärkender Verstärker V mit geeigneter Bandpaßcharakteristik - oder mit z.B. nachgeschalteten - zusätzlichen Bandpaß, und evtl. noch ein Demodulator D mit einem RC-Glied zur Erzeugung der Hüllkurve der empfangenen Signale, sowie ein auswertender einen A/D-Wandler enthaltender Mikroprozessor P nachgeschaltet werden, der dann seinerseits z.B. ein Relais R zur Auslösung eines Alarmes mittels der Hupe L steuert, und/oder der sicherheitshalber bei einem Scheibenbruch auch die Zündung, den Anlasser o.dgl. des KFZ unterbrechen kann. Besonders eine Auswertung der so gewonnenen Signale nach Amplitude, Zeit und Frequenz mittels des Prozessors P steigert die Zuverlässigkeit der Überwachung der Glasflächen und damit des Raumes.

Störeinflüsse sind bei der Erfindung relativ leicht unterdrückbar oder vermeidbar : Fremdgeräusche im Ultraschallbereich aus der Umgebung, hier aus der Umgebung des KFZ, werden durch die Glasscheiben stark gedämpft und haben damit einen entsprechenden Signalabstand zum vor der Mikrofonanordnung zu empfangenden Nutzsignal, besonders wenn mittels des Prozessors P eine entsprechende Pegelauswertung durchgeführt wird. Zusätzlich kann durch eine Bewertung des von der Mikrofonanordnung empfangenen Empfangssignals getrennt nach Amplitude, Zeit und Frequenz die Zuverlässigkeit des Überwachungssystemes weiter erhöht werden.

Vorteilhafterweise ist also bei der Erfindung auch der Verkabelungsaufwand, hier im KFZ, gering, weil die Art und der Ort für den Einbau der Mikrofonanordnung weitgehend beliebig sind. Außerdem können im Prinzip sogar alle Scheiben, hier das KFZ, sogar mit einer einzigen Mikrofonanordnung überwacht werden. Das System ist also besonders einfach und damit kostengünstig und überdies in hohem Maße zuverlässig.

Die Mikrofonanordnung S dieses gezeigten Scheibenbruch-Überwachungssystem kann, wie erwähnt, auch mehrfach ausgenutzt werden, und zwar eben auch bei den gezeigten KFZ-Beispielen. Ein - z.B. durch ein Mikrophon gebildeter - Sensor S kann nämlich zusätzlich als Empfangsorgan, also als Komponente eines akustischen Radarsystems, also z.B. als Empfangsorgan eines Doppler-Effekt-Radarsystems - oder eines Impuls-Echo-Systems ohne Ausnutzung des Doppler-Effektes - betrieben werden, was auch eine Verbesserung der Sicherung des Raumes mit sich bringt.

Aus den obigen Erläuterungen zu den gezeigten Beispielen ist außerdem erkennbar, der Aufwand besonders klein ist, vor allem auch, weil alle zu überwachenden Scheiben des Raumes zumindest im Prinzip sogar mit nur einer einzigen Mikrofonanordnung überwacht werden können.

Außerdem ist aus den Erläuterungen bereits erkennbar, daß die bei Scheibenbruch auftretenden typischen, besonders hohen Frequenzen des Schalls ausgenutzt werden können, wenn der betreffende Sensor im Ultraschallbereich liegenden, für einen Scheibenbruch typischen Schwingungen überwacht.

Ferner ist ein Vorteil einer Weiterbildung der Erfindung, daß das fehlerhafte Nichterkennen von Scheibenbrüchen weitgehend vermieden werden kann, wenn die Mikrofonanordnung S akustische Schwingungen oberhalb 100 kHz überwacht. Wie sich nämlich experimentell vor allem bei KFZ-Scheiben ergab, können bei alleinigem Ausnutzen der Frequenzen unterhalb 100 kHz noch zu häufig Scheibenbrüche noch nicht erkannt werden, besonders wenn ein Einbrecher durch irgendwelche Maßnahmen die Schwingfähigkeit der zerbrechenden Scheibe dämpft.

Wenn man beim erfindungsgemäßen Überwachungssystem mindestens einen, eine Richtcharakteristik C aufweisenden, also je nach Richtung unterschiedliche Empfindlichkeiten aufweisende Mikrofonanordnung verwendet, und wenn hierbei die Mikrofonanordnung eine solche Richtcharakteristik C hat, vgl. FIG 3 und 4, daß die Mikrofonanordnung S die von ihm zu überwachenden akustischen Schwingungen, welche bei einem Bruch von entfernt liegenden, von ihm zu überwachenden Scheibenflächen ausgehen, - trotz der bei hohen Ultraschallfrequenzen, z.B. bei rund 100 kHz, oft hohen Dämpfungen der Schallenergie durch die übertragende Luft - zumindest in der Regel mit ähnlich großer Empfindlichkeit empfangen kann wie die von ihm zu überwachenden akustischen Schwingungen, welche bei einem Bruch von in der Nähe liegenden, von ihm zu überwachenden Scheibenflächen ausgehen - wenn man also die Keule / die Keulen der Richtcharakteristik C auf die entfernt liegenden Scheiben richtet, weil ein von diesen Scheiben ausgehender Schall in der Innenraumluft stärker gedämpft wird als der von einer nahen Scheibe ausgehende Schall - , dann kommt man nicht nur mit einem einzigen Sensor aus, sondern man kann trotzdem eine angenähert gleich hohe Zuverlässigkeit des Überwachungssystems für alle zu überwachender Scheiben des Raumes erreichen, selbst wenn die Anzahl der zu überwachenden Scheiben sehr hoch ist und wenn zusätzlich manche der zu überwachenden Scheiben nahe am Sensor und andere sehr weit entfernt von der Mikrofonanordnung sind.

Wenn man bei einem erfindungsgemäßen Überwachungssystem eines KFZ die betreffende Mikrofonanordnung nahe dem oberen Rand der Frontscheibe, vgl. GF, anbringt, kann eine besonders günstige Lösung für ein KFZ erreicht werden : Hindernisse, z.B. Nackenstützen, zwischen der Mikrofonanordnung und den zu überwachenden Scheiben können dann leicht vermieden werden. Zusätzlich kann ein Einbrecher nur viel schwerer gleichzeitig die Scheibe und die Mikrofonanordnung zerstören, als wenn die Mikrofonanordnung am unteren Rand der Scheibe angebracht wäre. Überdies kann dann die Mikrofonanordnung sogar im Fuße des Innen-Rückspiegels oder auch in einer dort angebrachten Innenbeleuchtung eingebaut sein und dadurch eine besonders unauffällige, vom Design her besonders ansprechende Lösung ermöglicher.

Wenn man aber bei einem erfindungsgemäßen Überwachungssystem eines KFZ die betreffende Mikrofonanordnung nahe dem oberen Rand der Heckscheibe, vgl. GH, anbringt, kann man ebenfalls eine günstige Lösung für ein KFZ erreichen : Die Mikrofonanordnung kann dann auch recht unauffällig in der dortigen Dachverkleidung angebracht werden, wobei dann ebenfalls Hindernisse, z.B. Nackenstützen, zwischen der Mikrofonanordnung und den zu überwachenden Scheiben leicht vermeidbar sind. Zusätzlich kann ein Einbrecher auch dann nur viel schwerer gleichzeitig die Scheibe und den die Mikrofonanordnung zerstören, als wenn die Mikrofonanordnung am unteren Rand dieser Scheibe angebracht wäre.

Wenn die betreffende Mikrofonanordnung, vgl. die FIG 3 und 4, jeweils in der Mitte des oberen Randes der betreffenden Scheibe, vgl. GF, GH, angebracht wird, kann man zusätzlich einen Sensor mit leicht herstellbarer spiegelsysmmetrischer Richtcharakteristik C verwenden, also z.B. eine Mikrofonanordnung, dessen Richtcharakteristik C gemäß den FIG 3 und 4 in besonders leicht herstellbarer Weise angenähert zwei sich schwach überlappende Keulen bildet.

## Patentansprüche

1. Überwachungssystem zur Überwachung der Scheiben (GF, GV, GS, GK, GH, GD) eines Innenraumes (I) mit mehreren Scheiben und mit die Scheiben umgebenden seitlichen und/oder oberen und / oder unteren Wänden (W) mittels einer Mikrofonanordnung (S),
- wobei die Mikrofonanordnung jeweils die typischerweise bei einem Scheibenbruch auftretenden Schallschwingungen im Ul-traschallbereich oberhalb 100 kHz empfangen kann,
z.B. zur Überwachung eines KFZ-Innenraumes auf Einbrecher, **dadurch gekennzeichnet,**
- daß eine einzige Mikrofonanordnung im Innenraum (I) und / oder an zumindest einer der Wände des Innenraumes so befestigt ist, daß sie die im wesentlichen nur von der Innenraumluft mit starker Dämpfung übertragenen Schallschwingungen im Ultraschallbereich oberhalb 100 kHz überwacht, und
- daß die Richtcharakteristik (C) der Mikrofonanordnung so an die Geometrie des überwachten Innenraumes angepaßt und so ausgerichtet ist, daß sie (C) die Schallschwingungen,
° welche bei einem Bruch von entfernt liegenden, zu überwachenden Scheibenflächen (in FIG 3 : GH, GK; in FIG 4 : GF, GV) empfangen werden, zumindest in der Regel mit ähnlich großer Empfindlichkeit zu empfangen gestattet wie die Schallschwingungen,
° welche bei einem Bruch von in der Nähe liegenden, zu überwachenden Scheibenflächen (in FIG 3 : GF, GV; in FIG 4 : GH, GK, GS) empfangen werden.

2. Überwachungssystem nach Patentanspruch 1 zur Überwachung eines KFZ-Innenraumes,
**dadurch gekennzeichnet,**
- daß die Mikrofonanordnung in etwa oberhalb der Längsachse des KFZ angebracht ist und eine mehr oder weniger herzförmige Richtcharakteristik aufweist.

3. Überwachungssystem nach Patentanspruch 1 oder 2,
**dadurch gekennzeichnet**,
- daß die Mikrofonanordnung nahe dem oberen Rand der Frontscheibe (GF) angebracht ist.

4. Überwachungssystem nach den Patentansprüchen 2 und 3,
**dadurch gekennzeichnet**,
- daß die Mikrofonanordnung nahe dem oberen Rand der Heckscheibe (GH) angebracht ist.

5. Überwachungssystem nach einem der vorhergehenden Patentansprüche,
**dadurch gekennzeichnet**,
- daß die Mikrofonanordnung zumindest von Zeit zu Zeit zusätzlich jeweils die Mikrofonanordnung eines akustischen Radarsystems im dafür geeigneten Frequenzbereich bildet, welcher vom Frequenzbereich, der zur Überwachung auf Scheibenbruch genutzt wird, abweichen kann.

6. Überwachungssystem nach Patentanspruch 5,
**dadurch gekennzeichnet**,
- daß das Radarsystem zusätzlich den Dopplereffekt ausnutzt.

## Claims

1. Monitoring system for monitoring the window panes (GF, GV, GS, GK, GH, GD) of an interior (I) with a plurality of window panes and with lateral and/or upper and/or lower walls (W) which surround the window panes by means of a microphone arrangement (S),
- in which the microphone arrangement can in each case receive the sonic vibrations typically produced in the ultrasonic range above 100 kHz when a pane is broken,
for example for monitoring a motor vehicle interior for intruders, characterised
- in that a single microphone arrangement is fastened in the interior (I) and/or to at least one of the walls of the interior in such a way that it monitors essentially only the sonic vibrations transmitted with considerable damping in the ultrasonic range above 100 kHz by the air in the interior, and
- in that the directional characteristic (C) of the microphone arrangement is matched to the geometry of the monitored interior and is designed in such a way that it (C) allows the reception of the sonic vibrations
· which are received in the case of a breakage of remote pane areas (in FIG 3: GH, GK; in FIG 4: GF, GV) to be monitored at least as a rule with similar high sensitivity as the sonic vibrations
· which are received in the case of a breakage of proximate pane areas (in FIG 3: GF, GV; in FIG 4: GH, GR, GS) to be monitored.

2. Monitoring system according to Patent Claim 1 for monitoring a motor vehicle interior, characterised in that the microphone arrangement is attached approximately above the longitudinal axis of the motor vehicle and has a more or less heart-shaped directional characteristic.

3. Monitoring system according to Patent Claim 1 or 2, characterised in that the microphone arrangement is attached in the vicinity of the upper edge of the wind-screen (GF).

4. Monitoring system according to Patent Claims 2 and 3, characterised in that the microphone arrangement is attached in the vicinity of the upper edge of the rear screen (GH).

5. Monitoring system according to one of the preceding patent claims, characterised in that the microphone arrangement can additionally form at least from time to time in each case the microphone arrangement of an acoustic radar system in a suitable frequency range for this purpose, which may deviate from the frequency range which is used for monitoring for pane breakage.

6. Monitoring system according to Patent Claim 5, characterised in that the radar system additionally utilizes the Doppler effect.

## Revendications

1. Système de surveillance des vitres (GF,GV,GS,GK,GH,GD) d'un habitacle (I) comportant plusieurs vitres et des parois latérales et/ou supérieures et/ou inférieures (W), qui entourent les vitres, au moyen d'un dispositif à microphone (S),
- dans lequel le dispositif à microphone peut recevoir respectivement les vibrations acoustiqes, qui apparaissent de façon typique lors du bris d'une vitre, dans la gamme des ultrasons supérieure à 100 kHz, par exemple pour la surveillance de l'habitacle d'un véhicule automobile vis-à-vis d'un cambrioleur,
caractérisé par le fait
- qu'un seul dispositif à microphone est fixé dans l'habitacle (I) et/ou sur au moins l'une des parois de l'habitacle, de sorte qu'il suveille les vibrations acoustiques dans la gamme des ultrasons supérieure à 100 kHz, qui sont transmises avec un fort amortissement par l'air de l'habitacle, et
- que la caractéristique directionnelle (C) du dispositif à microphone est adaptée à la géométrie de l'habitacle surveillé et est agencée de telle sorte qu'elle (C) permet la réception des vibrations acoustiques
. qui sont reçues dans le cas d'un bris de surfaces de vitres à surveiller qui sont éloignées (à la figure 3 : GH, GK; à la figure 4 : GF, GV),
au moins en général avec une sensibilité aussi élevée que les vibrations acoustiques
. qui sont reçues dans le cas d'un bris de surfaces de vitres à surveiller qui sont proches (à la figure 3 : GF, GV; à la figure 4 : GH,GK,GS).

2. Système de surveillance suivant la revendication 1 pour la surveillance de l'habitacle d'un véhicule automobile, caractérisé par le fait
- que le dispositif à microphone est disposé approximativement au-dessus de l'axe longitudinal du véhicule automobile et possède une caractéristique directionnelle plus ou moins en forme de cardioïde.

3. Système de surveillance suivant la revendication 2, caractérisé par le fait
- que le dispositif à microphone est disposé à proximité du bord supérieur du pare-brise (GF).

4. Système de surveillance suivant les revendications 2 ou 3, caractérisé par le fait
- que le dispositif à microphone est disposé à proximité du bord supérieur de la vitre arrière (GH).

5. Système de surveillance suivant l'une des revendications précédentes, caractérisé par le fait
- que le dispositif à microphone forme en supplément, au moins de temps à autres, respectivement le dispositif à microphone d'un système de radar acoustique dans la gamme des fréquences appropriée à cet effet, qui peut différer de la gamme des fréquences utilisée pour la surveillance en cas de bris de vitres.

6. Système de surveillance suivant la revendication 5, caractérisé par le fait
- que le système radar utilise en outre l'effet Doppler.
